# EUROPÄISCHE PATENTSCHRIFT

(11) **EP 0 801 290 B1**
(45) Veröffentlichungstag und Bekanntmachung des Hinweises auf die Patenterteilung: **07.01.2004**
(21) Anmeldenummer: 97810193.9
(22) Anmeldetag: 04.04.1997
(51) Int. Cl.: G01B 13/12, G01B 21/06, G01B 13/00

(54) **Positioniersystem mit Druckmessung in der Luftschicht zwischen Messkopf und Messgut**
Positioning-system with pressure-measurement in the air-layer between the measuring head and the object to be measured
Système de positionnement avec mesure de la pression dans la couche d'air entre la tête de mesure et l'objet à mesurer

(30) Priorität: 09.04.1996 CH 89296
(43) Veröffentlichungstag der Anmeldung: 15.10.1997
(73) Patentinhaber: Hch. Kündig & Cie. AG, 8620 Wetzikon ZH (CH)
(72) Erfinder: Stuker, Peter, 8305 Dietlikon (CH)
(74) Vertreter: Hammer, Bruno, Dr.

(56) Entgegenhaltungen:
- EP-A- 0 214 100
- EP-A- 0 463 255
- DE-A- 3 612 914
- GB-A- 2 084 735
- US-A- 5 021 655

## Beschreibung

Die Erfindung bezieht sich auf eine Vorrichtung zur Bestimmung eines Abstandes nach Anspruch 1.

Bei bisherigen Ausführungen zur Distanzmessung wird mit einer Düse ein Luftstrahl auf einen Körper gerichtet, dessen Position bestimmt werden soll. Die vom Körper zurückprallende Luft wird in einer die Düse umfassenden Kammer gestaut. Dieser Staudruck wird gemessen und bildet ein Mass für den Abstand der Düse vom Körper.

Solche Distanz-Mess-Systeme werden in verschiedenen Gebieten angewendet. Die zu messenden Abstände bewegen sich in der Grössenordnung von einigen Millimetern bis hinunter zu einigen Nanometern. Eine Verwendung ist zum Beispiel die Bestimmung der achsialen Lage einer Welle. In einer andem Anwendung wird der Abstand eines lithografischen Schreibkopfes von der zu beschreibenden Oberfläche gemessen.

Eine besonders vorteilhafte Anwendung einer solchen Distanzmessung ergäbe sich bei der Dickenmessung einer Folie. In allen bisherigen Anwendungen wird aber der Abstand von einer harten Oberfläche gemessen, welche durch den Luftstrahl nicht verformt werden kann. Soll aber die Distanz zu einer leicht verformbaren Fläche gemessen werden, so sind die bisherigen Ausführungen nicht geeignet.

Ein bisher ungelöstes Problem liegt darin, die Dicke einer Folie berührungslos und nur von einer Seite her zu messen. Zur Messung der Dicke einer Folie sind mehrere Methoden bekannt. Als Folie wird im Folgenden eine Fläche oder eine, einen Raumkörper umhüllende Oberfläche, aus Kunststoff, Metall, Gewebe, Papier etc. oder Verbunden daraus, bezeichnet. Bei der Herstellung von Kunststoffolien durch Blasextrusion ist in der Regel nur die Aussenseite des Folienschlauches für die Messung zugänglich. Die Dicke einer elektrisch nicht leitenden Folie wird zum Beispiel mittels einer kapazitiven Sonde (Messkopf) gemessen. Dabei ist der Messkopf als Kondensator ausgebildet, dessen Streufeld durch die Folie beeinflusst wird. Ist der genannte Kondensator Teil eines Schwingkreises, so ergibt sich je nach Foliendicke eine andere Resonanzfrequenz. Durch Messung dieser Frequenz kann die Foliendicke bestimmt werden.

Da das Streufeld nur in unmittelbarer Nähe des Messkopfes genügend beeinflusse werden kann (Abstand kleiner als 0.3 mm), ist die Grösse des Abstandes zwischen Messkopf und Folie entscheidend. Änderungen dieses Abstandes erzeugen einen Messfehler für die Dickenmessung. Um Abstandsänderungen zu vermeiden, wird am einfachsten der Abstand 0 gewählt, das heisst, der Messkopf berührt die Folie. Bei der kontinuierlichen Dickenmessung an der Folie in der Produktion gleitet die Folie am Messkopf vorbei. Da die Reibung der Messsonde an der Folie zu einer Spurzeichnung oder sogar zu Abriss des Folienschlauches führen kann, muss die Reibung möglichst gering gemacht werden, Bei bestimmten Folienarten besteht sogar die Forderung nach berührungsfreier Messung der Dicke (und daher auch berührungsloser Messung des Abstandes von der Folie). Dies wird gemäss dem Stand der Technik durch ein Luftkissen, welches zwischen der Folie und dem Messkopf erzeugt wird, erreicht.

Zur Dickenmessung kann auch ein anderes Messprinzip, zum Beispiel Beta-Moder Gamma-Rückstreuung verwendet werden. Sei dieser Methode kann der Abstand zwischen dem Messkopf und der Folie ca. 1 cm betragen. Änderungen dieses Abstandes um mehr als +/- 1 mm erzeugen aber auch einen starken Messfehler, der vermieden werden soll. Dieser Abstand kann durch mechanische Abstandhalter konstant gehalten werden. Um die Reibung klein zu halten, werden diese Abstandhalter gemäss dem Stand der Technik mit Rollen versehen. Sei besonders empfindlichen Folien ist aber selbst die Berührung durch Rollen nicht erwünscht.

Bei der Messung mit radioaktiver Strahlung wird üblicherweise nicht die Dicke der Folie angegeben, sondern das Flächengewicht, welches zur Dicke proportional ist.

In EP 0 463 255 ist eine pneumatische Vorrichtung zum Bestimmen und Konstanthalten des Abstands einer Giessdüse zu einem Giessrad beschreiben. Der Abstand zwischen Giessdüse und Giessrad wird aufgrund von Druckänderungen korrigiert und konstantgehalten.

EP 0 214 100 beschreibt eine pneumatische Vorrichtung zum Bestimmen des Abstands zu einem Gegenstand. Eine Luftdüsenkörper ist axial beweglich gelagert. Die axiale Auslenkung des Luftdüsenkörpers aus welchem ein Luftstrahl auf den Gegenstand gerichtet wird, ist das Mass für den Abstand des Düsenkörpers vom Gegenstand.

in GB 2 084 735 ist eine pneumatische Vorrichtung zum Bestimmen der Schichtdicke eines Produktes, das auf eine Walze liegt und von dieser gestützt ist, beschrieben.

Aufgabe der Erfindung ist es, eine Vorrichtung zu schaffen, mit der kleine Abstände zwischen zwei Körpern gemessen werden können. Insbesondere soll der Abstand zu einem sehr welchen, elastisch und/oder sogar plastisch leicht verformbaren Körper gemessen werden können, zum Beispiel zu einer Kunststofffolie oder zur Oberfläche einer Flüssigkeit. Die Konstruktion der Abstands-Messeinrichtung kann an das flache und durch den Luftstrahl verformbare Messgut angepasst werden, indem am Ausgang der Düse eine Fläche ausgebildet wird, damit sich zwischen dieser Fläche der Düse und dem zu messenden flachen Gegenstand ein Luftkissen mit einer laminaren Luftströmung bilden kann. Der Druck, welcher sich im Zentrum des Luftkissens und somit auch in der Luftzuführung zur Austrittsöffnung bildet, ist ungefähr proportional zur ausgebildeten Fläche. Der Staudruck muss nicht ausserhalb der Düse, sondern kann auch in der Zuleitung zur Düse gemessen werden. Der Luftdruck kann auch im Luftkissen gemessen werden, indem in der Fläche, welche um die Düse ausgebildet wird, mindestens eine weitere Bohrung angebracht wird, durch welche Luft zum Drucksensor geführt wird. Der Drucksensor könnte auch direkt auf die eine der Flächen, welche die Begrenzung des Luftkissens bilden, aufgebracht werden. Es ist auch möglich, mehrere Drucksensoren gleichzeitig zu verwenden.

Die Aufgabe, eine Mess-Sonde sehr nahe ( 0 < d < 0.3 mm ), aber berührungsfrei an einem Messgut zu positionieren, wird erfindungsgemäss dadurch gelöst, dass der Druck in dem Medium zwischen Mess-Sonde und Messgut gemessen wird, und daraus ein Regelsignal für den Abstand abgeleitet wird. Die abhängigen Ansprüche beziehen sich auf spezielle Anwendungen und vorteilhafte Ausführungsformen dieser Einrichtung. Die Luft zwischen Messgut und Mess-Sonde dient also nicht nur zur Verhinderung oder Verminderung der Reibung, sondem zusätzlich als Medium im Mess-System der Abstandsmessung und Regelung.

In diesen Ausführungen wird eine Mess-Sonde zur Dickenmessung von Folien als Beispiel gewählt. Die Abstands-Messung und Regelung kann aber auch mit einer beliebigen andern Einrichtung kombiniert werden, für welche eine Abstandspositionierung notwendig ist.

In der erfindungsgemässen Einrichtung wird Luft als strömendes Medium verwendet. Anstelle von Luft kann aber auch ein beliebiges anderes Gas oder ein anderes strömendes Medium, zum Beispiel Wasser, zur Abstandsmessung verwendet werden.

Bei der Herstellung von Kunststoffolien durch Blasextrusion wird der Folienschlauch vor allem durch die Kühlluft stark bewegt. Deshalb kann sich die Folienwand schnell auf die Messeinrichtung zu, oder von ihr weg bewegen. Bei berührender Messung muss der Messkopf daher relativ stark an den Folienschlauch angepresst werden, damit er nicht davon abgehoben wird. Um bei berührungsloser Dickenmessung eine Berührung der Folie trotz dieser Bewegung sicher zu vermeiden, muss der Luftfluss beziehungsweise der Druck im Luftkissen genügend hoch sein. Dadurch kann sich in der Blasfolie eine Spur abzeichnen. Die starken Bewegungen der Folie ergeben auch eine Schwankung der Luftspalt-Breite, wodurch die Resultate der Dickenmessung verfälscht werden.

Um die genannten Nachteile zu beheben, wird erfindungsgemäss die Position des Messkopfes relativ zur Folie so geregelt, dass dieser den Bewegungen der Folie folgt. Zur Messung und Regelung der Position des Messkopfes relativ zur Folie wird eine Grösse verwendet, welche aus dem Luftdruck in der Luftzuführung zu diesem Luftkissen abgeleitet wird. Damit die Positionierung genügend schnell erfolgen kann, wird der Messkopf zum Beispiel mit einem Gleichstrom-Linearmotor bewegt.

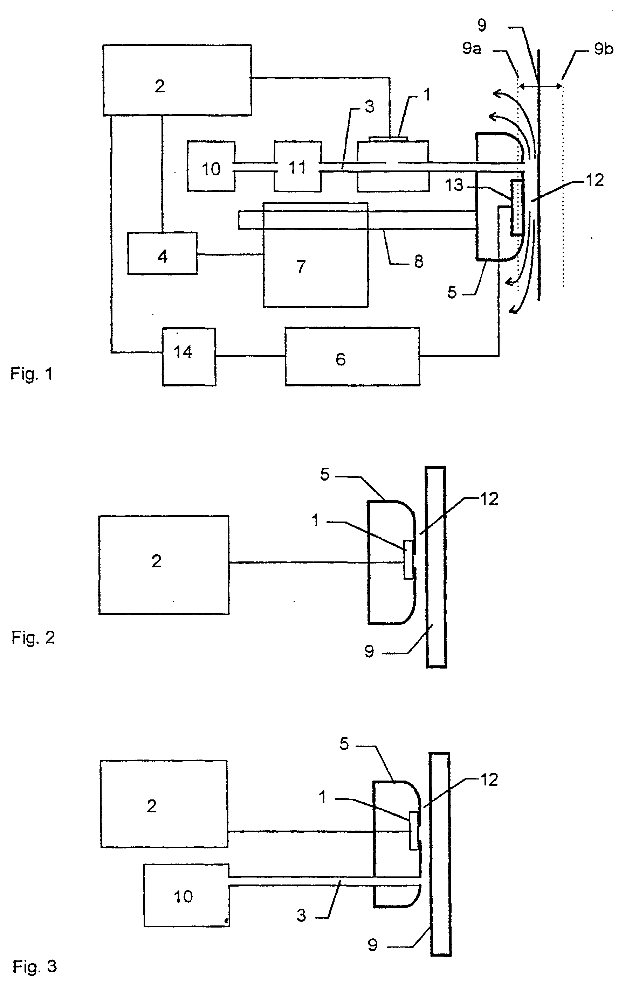

Die Erfindung wird anhand der schematischen Darstellung in Fig. 1 gezeigt. Ein Messkopf 5 zur Messung der Dicke einer Folie 9 wird mithilfe eines Motors 7 in die Nähe der Folie positioniert. Der Messkopf enthält einen Sensor 13 für die Dickenmessung oder bildet als ganzes einen Sensor, wie es dem Stand der Technik entspricht. Luft wird von einer Pumpe 10 zu diesem Messkopf geführt und verlässt diesen auf der Folienseite über Düsen. Sobald der Messkopf in die Nähe der Folie kommt, wird durch diese zugeführte Luft ein Luftkissen aufgebaut, welches den Abstand zwischen Folie und Messkopf im Submillimeterbereich stabil hält. Durch die Druckmesszelle 1 wird in der Luftzuführung der Druck gemessen. Damit Druckschwankungen von der periodisch arbeitenden Pumpe nicht auf die Druckmesszelle übertragen werden, kann ein Druckausgleichsraum 11, welcher für die Druckschwankungen einen Tiefpass bildet, in Serie geschaltet werden.

Der Druck, der gemessen wird, setzt sich aus einem statischen und einem dynamischen Teil zusammen. Wird Luft eingeblasen, so ergibt sich ein bestimmter konstanter Druck (statischer Anteil), welcher von der Distanz der beiden Körper abhängt. Durch die gegenseitige Bewegung der Körper - aufeinander zu oder voneinander weg - entsteht dazwischen eine Druckänderung (dynamischer Anteil), welche unabhängig ist davon, ob Luft in den Spalt eingeblasen wird oder nicht. Die Druckänderung ist abhängig von der Bewegungsgeschwindigkeit, von der Distanz und von der Grösse der Luftkissen-Fläche. Ein weiterer periodisch schwankender Anteil kann von der periodisch arbeitenden Luftpumpe herrühren. Wird dieser nicht durch ein Druckausgleichsgefäss herausgefiltert, kann er durch einen Drucksensor in der Luftleitung nahe der Pumpe erfasst, und elektronisch oder mathematisch kompensiert werden.

Fig. 2 zeigt eine Anordnung zur Distanzmessung zwischen zwei Körpern 5, 9 ohne Luftzuführung. Diese Anordnung genügt, um die Änderungen des Druckes im Luftspalt 12 zwischen den beiden Körpern zu erfassen.

Fig. 3 zeigt eine Anordnung zur Distanzmessung zwischen zwei Körpern 5, 9 mit einer Luftzuführung 3, durch welche Luft aus einer Pumpe 10 zum Luftspalt 12 geführt wird. Dadurch wird ein Luftkissen aufgebaut, dessen statischer Druck ein Mass für den mittleren Abstand der beiden Körper 5, 9 darstellt.

Wie Fig. 1 zeigt, werden die Druckschwankungen von der Druckmesszelle 1 aufgenommen und von der dazugehörenden Elektronik 2 mit einem Sollwert verglichen. Die Differenz wird an den Regler und Verstärker 4 weitergeleitet, welcher den Motor 7 ansteuert. Dieser bewegt den Messkopf über eine linear geführte Mechanik 8 so, dass der Druck im Luftkissen, beziehungsweise der Luftzuführung dazu, den Solldruck wieder erreicht, was heisst, dass der Messkopf den Bewegungen der zu messenden Folie folgt. Der Bewegungsraum 9a, 9b der Folie kann einige mm bis einige cm ausmachen. Da die Schwankungen der Folie mit einer Frequenz von mehreren Hertz erfolgen, muss der Messkopf sehr schnell und präzise positidniert werden können. Die schnelle Positionierung erfolgt vorteilhaft mit einem Linearmotor. Grössere und langsamere Bewegungen der Folie können mit einem langsamer arbeitenden teleskopartigen System ausgeglichen werden, welches das ganze, schneller arbeitende System trägt, und von diesem Steuersignale erhält.

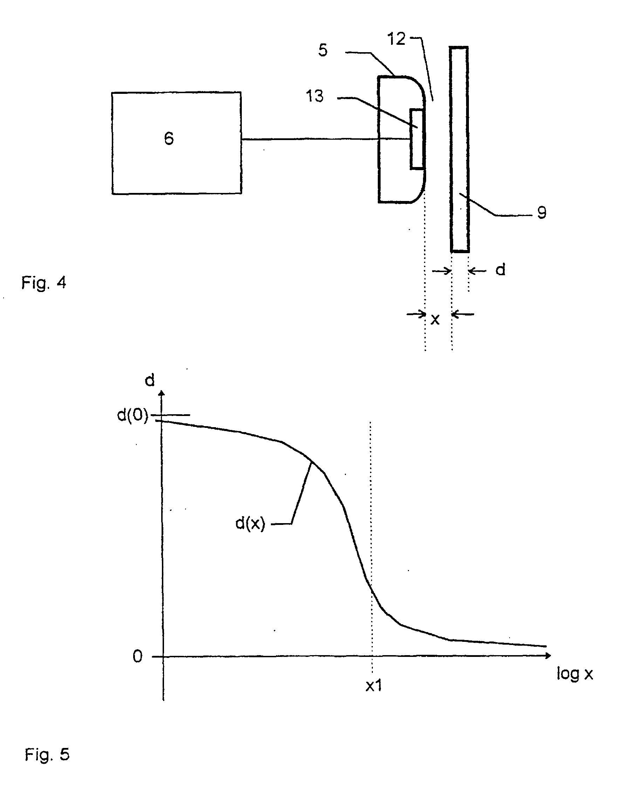

Unabhängig von dieser Abstandsmessung und/oder Regelung erfolgt die eigentliche Dickenmessung der Folie. Bei der Dickenmessung mit einem kapazitiven Sensor gemäss Stand der Technik entsteht ein Messfehler, falls der Messkopf die Folie nicht direkt berührt. Fig. 4 und 5 zeigen eine mögliche Abhängigkeit dieses Messfehlers vom Abstand zwischen Messkopf und Folie. Ist der Verlauf dieser Kurve zumindest abschnittsweise bekannt, und wird x, der Abstand zwischen Messkopf und Folie gemessen, so kann in einer Korrektureinheit 14 daraus die korrigierte Foliendicke bestimmt werden. Diese Korrektur kann anstelle oder in Ergänzung zur Abstandsregelung erfolgen. Die Abhängigkeit kann zum Beispiel mit d(x) = d(x=0) / (1 + x) angenommen werden, wobei d die gemessene Dicke und x der Abstand zwischen Messkopf und Folie ist.

Für die Kombination der Abstandsmessung mit einer Dickenmessung mit dem kapazitiven Prinzip, kann der Sensor für den Abstand vorteilhaft mit dem Sensor für die Dicke im gleichen Messkopf kombiniert werden. Wie in Fig. 1 gezeigt, kann dies einfach ausgeführt werden, indem der Dickenmesskopf 5 mit mindestens einer Luft-Aus- oder Eintrittsöffnung versehen wird, durch welche eine Luftverbindung zwischen dem Luftspalt 12 und einem Drucksensor 1 besteht.

Für andere Anwendungen können die beiden Sensoren unabhängig voneinander aufgebaut und auch unabhängig voneinander bewegt werden. Für die Dickenmessung mit einem radioaktiven Messprinzip kann der Abstandssensor allein sehr leicht gebaut werden und zum Beispiel im Abstand von 0,2 mm von der Folie, mit einer Positioniergenauigkeit von +/- 0,1 mm positioniert werden. Seine Position, und somit die momentane Position der Folie relativ zu einer Referenzebene, kann mit einem System basierend auf dem Hall-Prinzip elektronisch erfasst werden. Mechanisch unabhängig davon kann die Dickenmesseinrichtung mit radioaktiver Quelle, Strahlungssensor und Abschirmung im Abstand von 5 bis 10 mm von der Folie, mit einer erlaubten Ungenauigkeit von +/- 1 mm positioniert werden. Da der Dickensensor wesentlich schwerer sein kann als der Abstandssensor, ist es vorteilhaft, die erlaubte Positionier-Ungenauigkeit voll auszunutzen.

## Patentansprüche

1. Vorrichtung umfassend
- eine Messeinrichtung zum Bestimmen der Dicke und/oder des Flächengewichts eines Folie (9) und
- eine Abstandsmesseinrichtung zum Bestimmen des Abstands und/oder der Änderung des Abstands zwischen der besagten Messeinrichtung und einem aus einer welchen elastische und/oder plastisch verformbaren Folie (9) bestehenden Messgut, welches an der besagten Messeinrichtung und der Abstandsmesseinrichtung vorbei bewegbar sowie hin- und wegbewegbar ist,
- wobei die Abstandsmesseinrichtung einen Sensor (1) zum Bestimmen des Drucks und/oder Druckänderung des Mediums in dem durch den besagten Abstand gebildeten Spalt (12) aufweist.

2. Vorrichtung nach Anspruch 1, zusätzlich umfassend eine Zufuhreinrichtung (3) von Gas, insbesondere von Luft in den Spalt (12) zur Erzeugung eines Gas-, bzw. Luftkissens.

3. Vorrichtung nach Anspruch 2 bei welcher der Sensor (1) zum Bestimmen des Drucks und/oder der Druckänderung im Spalt (12) in der Zufuhreinrichtung (3) zur Erzeugung des Luftkissens angeordnet ist

4. Vorrichtung nach einem der Ansprüche 1 bis 3 bei welcher mindestens ein Teil der Abstandsmesseinrichtung in die Messeinrichtung zum Bestimmen der Dicke und/oder des Flächengewichts der Folie (9) eingebaut ist.

5. Vorrichtung nach einem der Ansprüche 1 bis 4, mit einer Einrichtung zum Positionieren der Abstandsmesseinrichtung, welcher das mit der Abstandsmesseinrichtung bestimmte Signal für den Abstand und/oder die Änderung des Abstands zwischen Abstandsmesseinrichtung und Messgut zugeführt wird, um den Bewegungen des Messguts zur Abstandsmesseinrichtung hin und von dieser weg zu folgen und den Abstand stabil zu halten.

6. Vorrichtung nach Anspruch 5, bei welcher die Abstandsmesseinrichtung vom Messgut mindestens eine Luftaustrittsöffnung oder Luftaustrittsöffnung aufweist, die eine Verbindung zwischen Spalt (12) und einem Drucksensor (1) bildet.

7. Vorrichtung nach einem der Ansprüche 1 bis 6, mit einer Einrichtung zum Bestimmen der Dicke und/oder des Flächengewichts der Folie (9) und/oder deren Änderung, die kapazitiv arbeitet, oder die mit Rückstreuung von Beta- und/oder Gammastrahlung arbeitet.

8. Vorrichtung nach einem der Ansprüche 5 bis 7, bei welcher die Einrichtung zum Positionieren einen Linearmotor (7) insbesondere einen Gleichstrom-Linearmotor oder eine pneumatische Einrichtung ist.

9. Vorrichtung nach einem der Ansprüche 5 bis 8, mit einer zweiten vorzugsweise teleskopartigen Positioniereinrichtung, zum Ausführen von grösseren Bewegungen als die erste Positioniereinrichtung, wobei der ersten Positioniereinrichtung die mit der Abstandsmesseinrichtung bestimmte Signale für den Abstand und/oder die Änderung des Abstands zwischen Abstandsmesseinrichtung und Messgut zugeführt werden, um den Bewegungen des Messguts zur Abstandsmesseinrichtung hin und von dieser weg zu folgen und den Abstand von der Messeinrichtung zum Messgut stabil zu halten und die zweite Positioniereinrichtung die Positionierung mit grösseren Bewegungen als die erste Positioniereinrichtung unterstützt.

10. Vorrichtung nach einem der Ansprüche 1 bis 9, mit einer Korrektureinheit (14) zu Korrektur der Werte der Messeinrichtung (5), welcher die Werte der Vorrichtung zum Bestimmen des Abstands zugeführt werden um die Werte der Messeinrichtung (5) zu korrigieren.

## Claims

1. Arrangement comprising an apparatus for the determination of the thickness and/or the weight per unit area of a foil (9) and an apparatus for the determination of a spacing and/or a change of spacing between the said apparatus and a material being measured which is a soft, elastic and/or plastically deformable foil (9)and which passes by and/or moves towards or away from the apparatus for the determination of the thickness and/or the weight per unit area of the material being measured, the apparatus for the determination of a spacing and/or a change of spacing including a sensor (1) for the measurement of the pressure and/or the change of the pressure of the medium in the gap (12) defined by the spacing.

2. Arrangement in accordance with claim 1, further including a gas supply device (3), in particular an air supply device for the supply of gas, in particular air into the gap (12) for the generation or a gas cushion of air cushion respectively.

3. Arrangement in accordance with claim 2, where the sensor (1) for the measurement of the pressure and/or the change in pressure is arranged in the supply for the generation of the air cushion.

4. Arrangement in accordance with any of claims 1 to 3, where at least part of the apparatus for the determination of a spacing is integrated into the apparatus for the for the determination of the thickness and/or the weight per unit area of the foil (9).

5. Arrangement in accordance with any of claims 1 to 4 with an apparatus for the positioning of the apparatus for the determination of a spacing, and where the signal representative for the spacing, measured by the apparatus for the determination of a spacing and/or the change of a spacing between the apparatus and the material to be measured is fed to the apparatus for the positioning as to follow the movements of the material, towards or away from the apparatus for the determination of the thickness, and to keep the spacing constant.

6. Arrangement in accordance to claim 5, where the apparatus for the determination of spacing from a material to be measured includes at least on air outlet opening that constitutes a connection between the gap and a pressure sensor (1).

7. Arrangement in accordance with any of claims 1 to 6 with an apparatus for the determination of the thickness and/or the weight per unit area of a foil (9) and/or the change thereof, that uses a capacitive measuring method, or a method that makes use of the back scattering of beta radiation and/or gamma radiation.

8. Arrangement in accordance with any of claims 5 to 7, where the apparatus for positioning is a linear motor (7), in particular a DC linear motor or a pneumatic apparatus.

9. Arrangement in accordance with any of claims 5 to 8, with a second, preferably telescopic apparatus for the execution of larger range movements for positioning, than the first apparatus for positioning, whereby the second apparatus for positioning supports with larger movements than the first apparatus for positioning that receives the signal representative for the spacing, measured by the apparatus for the determination of a spacing and/or the change of a spacing between the apparatus and the material to be measured that follows the movements of the material, towards or away from the apparatus for the determination of the thickness for keeping the spacing constant.

10. Arrangement in accordance of any of claims 1 to 9 further including a correction unit (14), to which the values of the measuring unit (5) for measuring spacing are fed, as to correct the measured values of measuring unit (5).

## Revendications

1. Dispositif comprenant une installation de mesure pour déterminer l'épaisseur ou le poids par unité de surface d'un film (9) et une installation de mesure de distance pour la détermination de l'écart entre ladite installation de mesure et un matériau à mesurer constitué d'un film souple, élastique et/ou déformable plastiquement qui peut se déplacer ou aller et venir devant ladite installation de mesure et l'installation de mesure de distance, l'installation de mesure de distance étant munie d'un capteur (1) servant à la détermination de la pression et/ou des variations de pression du fluide dans la fente constituée par ledit écartement en question.

2. Dispositif selon revendication de brevet 1 comprenant en outre un système d'alimentation (3) en gaz, en particulier d'air vers la fente (12) afin de créer un coussin de gaz respectivement d'air.

3. Dispositif selon revendication de brevet 2 dans lequel le capteur (1) servant à la détermination de la pression et/ou des variations de pression dans la fente (12) est installé dans le système d'alimentation (3) servant à créer le coussin d'air.

4. Dispositif selon l'une des revendications 1 à 3 dans lequel au moins une partie de l'installation de mesure de l'écartement est intégrée dans le système de mesure servant à la détermination de l'épaisseur et/ou du poids par unité de surface du film (9).

5. Dispositif selon l'une des revendications 1 à 4 avec un système de positionnement de l'installation de mesure de l'écartement auquel est transmis, par l' installation de mesure de l'écartement , le signal correspondant à l'écartement et/ou à la variation de l'écartement entre installation de mesure de l'écartement et le matériau à mesurer, afin de suivre les mouvements d'éloignement ou de rapprochement du matériau à mesurer par rapport à l'installation de mesure de l'écartement et de maintenir l'écart constant.

6. Dispositif selon revendication de brevet 5 dans lequel l'installation de mesure de l'écartement du matériau à mesurer comprend au moins un orifice de sortie d'air qui constitue une liaison entre la fente (12) et un capteur de pression (1).

7. Dispositif selon l'une des revendications 1 à 6 muni d'une installation servant à déterminer l'épaisseur et/ou le poids alaire du film (9) et/ou de leurs variations, qui travaille de façon capacitive ou selon le principe de la réfraction de rayonnements Beta et/ou Gamma.

8. Dispositif selon l'une des revendications 5 à 7, dans lequel le système de positionnement est constitué d'un moteur linéaire (7), en particulier d'un moteur linéaire à courant continu ou d'un système pneumatique.

9. Dispositif selon l'une des revendications de brevet 5 à 8 comprenant un deuxième dispositif de positionnement de préférence télescopique pour effectuer des mouvements plus grands que le premier dispositif de positionnement, les signaux correspondant à l'écart et/ou à la variation d'écart entre l'installation de mesure et le matériau à mesurer déterminés par l'installation de mesure de l'écartement étant envoyés vers le deuxième dispositif de positionnement afin de suivre les mouvements relatifs du matériau à mesurer par rapport à l'installation de mesure de l'écartement et de maintenir constant l'écart entre l'installation de mesure et le matériau à mesurer, et que le deuxième dispositif de positionnement soutient le positionnement grâce à des mouvements de plus grandes amplitudes que le premier dispositif de positionnement.

10. Dispositif selon l'une des revendications de brevet 1à 9 muni d'une unité de correction (14) pour corriger les valeurs de l'installation de mesure (5) qui reçoit les valeurs de mesure de l'installation pour déterminer l'écart afin de corriger les valeurs de l'installation de mesure (5).
